(19) **Europäisches Patentamt / European Patent Office / Office européen des brevets**

(11) **EP 1 834 191 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(21) Anmeldenummer: **05787290.5**

(22) Anmeldetag: **07.09.2005**

(51) Int Cl.:
**G01S 13/87** (2006.01)

(86) Internationale Anmeldenummer:
**PCT/EP2005/054420**

(87) Internationale Veröffentlichungsnummer:
**WO 2006/072471 (13.07.2006 Gazette 2006/28)**

(54) **FUNKBASIERTES ORTUNGSSYSTEM MIT SYNTHETISCHER APERTUR**

RADIOBASED LOCATING SYSTEM PROVIDED WITH A SYNTHETIC APERTURE

SYSTEME DE RADIOREPERAGE A OUVERTURE SYNTHETIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.01.2005 DE 102005000732**

(43) Veröffentlichungstag der Anmeldung:
**19.09.2007 Patentblatt 2007/38**

(73) Patentinhaber: **Symeo GmbH**
**85579 Neubiberg (DE)**

(72) Erfinder:
- **GULDEN, Peter**
  **80469 München (DE)**
- **MAX, Stephan**
  **38678 Clausthal-Zellerfeld (DE)**
- **VOSSIEK, Martin**
  **31139 Hildesheim (DE)**

(74) Vertreter: **Schulze, Mark**
**Von Lieres Brachmann Schulze**
**Patentanwälte**
**Grillparzerstrasse 12A**
**81675 München (DE)**

(56) Entgegenhaltungen:
EP-A- 0 550 073    DE-A1- 10 225 894
DE-A1- 19 512 787    DE-A1- 19 910 715
US-A- 6 037 893

- **VOSSIEK M ET AL: "An ultrasonic multielement sensor system for position invariant object identification" ULTRASONICS SYMPOSIUM, 1994. PROCEEDINGS., 1994 IEEE CANNES, FRANCE 1-4 NOV. 1994, NEW YORK, NY, USA, IEEE, US, Bd. 2, 1. November 1994 (1994-11-01), Seiten 1293-1297, XP010139788 ISBN: 0-7803-2012-3 in der Anmeldung erwähnt**
- **VOSSIEK M ET AL: "Wireless local positioning" IEEE MICROWAVE MAGAZINE IEEE USA, Bd. 4, Nr. 4, Dezember 2003 (2003-12), Seiten 77-86, XP002388470 in der Anmeldung erwähnt**
- **STELZER A ET AL: "RF-sensor for a local position measurement system" NONDESTRUCTIVE DETECTION AND MEASUREMENT FOR HOMELAND SECURITY 4-5 MARCH 2003 SAN DIEGO, CA, USA, Bd. 5048, März 2003 (2003-03), Seiten 136-144, XP002388471 Proceedings of the SPIE - The International Society for Optical Engineering SPIE-Int. Soc. Opt. Eng USA**
- **KATYL R H: "Compensating optical systems. I. Broadband holographic reconstruction" APPLIED OPTICS USA, Bd. 11, Nr. 5, Mai 1972 (1972-05), Seiten 1241-1247, XP002388472**

## Beschreibung

Die vorliegende Erfindung betrifft ein eine mobile und mindestens eine ortsfeste Station aufweisendes funkbasiertes Ortungssystem, insbesondere zur Bestimmung der räumlichen Position der mobilen Station, und ein Verfahren zur Erhöhung der Messgenauigkeit des funkbasierten Ortungssystems.

Funkbasierte Ortungssysteme sind in vielfältigen Ausführungen bekannt, einen Überblick liefert zum Beispiel der Artikel [1] "Wireless Local Positioning" der Autoren M. Vossiek, L. Wiebking, P. Gulden, J. Wieghardt, C. Hoffmann und P. Heide, welcher im Microwave Magazine des IEEE (Volume 4, Issue: 4. Dez. 2003, Seite 77-86) erschienen ist.

Funkbasierte Ortungssysteme funktionieren derart, dass Funksignale zwischen einer mobilen Station und zumeist mehreren ortsfesten Stationen ausgetauscht werden. Basierend auf den empfangenen Funksignalen werden entweder die relativen Entfernungen zwischen der mobilen und ein oder mehreren ortsfesten Stationen, oder die Relativwinkel zwischen mobiler und ein oder mehreren ortsfesten Stationen, oder Entfernungsdifferenzen zwischen der mobilen und je zwei ortsfesten Stationen bestimmt. Auf der Grundlage dieser Messwerte kann nun mittels Trilateralisation oder Triangulation die räumliche Position der mobilen Station bestimmt werden.

Bei funkbasierten Ortungssystemen besteht ein wesentliches Problem darin, das sich die Funksignale hier weitgehend ungerichtet im Raum ausbreiten müssen. Dieses ist erforderlich, da die relative Lage zwischen mobiler und ortsfester Einheit, beispielsweise im Gegensatz zu Richtfunkstrecken, vorab nicht bekannt ist. Das ungerichtete Aussenden von Funkwellen führt jedoch dazu, dass die Signale zwischen mobiler und ortsfester Einheit nicht nur über den direkten kürzesten Weg sondern zum Beispiel an Wänden oder Gegenständen reflektiert und daher auch über Umwege übertragen werden können. Aus diesen Umwegen resultiert unter Umständen eine große Verfälschung des Ortungsergebnis. Diese so genannte Mehrwege- bzw. Multipath-Problematik ist insbesondere bei Innenbereichsanwendung kritisch und ist der maßgebliche Faktor, der die erreichbare Genauigkeit von funkbasierten Ortungssystemen begrenzt. Wie zum Beispiel auch in dem oben genannten Artikel [1] ausgeführt wird, existieren aber gerade im Innenbereich vielfältige Anwendungen und insbesondere im Bereich der virtuellen Realität und der Automatisierungstechnik solche, die eine hohe Messgenauigkeit erfordern. Derartige Anwendungen sind mit den heute bekannten bzw. verfügbaren Funkortungssystemen nur sehr bedingt oder gar nicht auszuführen.

Es ist ferner bekannt, dass zur Verbesserung der Genauigkeit von Funkortungssystemen assistierende Sensoren (zum Beispiel Beschleunigungssensoren, Gyroskope, Odometer, Kompasssensoren, Neigungssensoren, Giersensoren, Linear- oder Winkelencoder etc.) sehr vorteilhaft eingesetzt werden können. Diese assistierenden Sensoren sind zumeist Relativsensoren, also solche, die keine absolute Position sondern die Veränderungen zu einer Ausgangslage in einem Bezugsraum bestimmen. Diese Multisensor- bzw. Hybridsysteme arbeiten zumeist derart, dass basierend auf Bewegungsmodellen die Messinformationen der unterschiedlichen Sensoren - zum Beispiel in einem Kalmanfilter - mit den Messdaten des Funkortungssensors kombiniert werden.

Nachteilig ist aus informationstechnischer Sicht bei derartigen Systemen, dass die einzelnen Endergebnisse anstelle der Rohdaten der Sensoren miteinander verknüpft werden, so dass durch die Verarbeitung in den Sensoren gegebenenfalls Informationen verloren gehen können. Würde zum Beispiel der Funksensor wegen einer kritischen Mehrwegesituation einen falschen Entfernungswert bestimmen, so würde dieser stark fehlerbehaftete Wert in die Auswertung/Kombination eingehen. Durch den Hybridansatz könnte der Fehler gegebenenfalls erkannt und/oder verringert werden, aber die Ausgangsbasis der Auswertung wäre durch den fehlerhaften Messwert nachhaltig verschlechtert.

DE 199 10 715 C2 beschreibt eine Reflektion von ausgesendeten Signalen als von Gegenständen und Hallenwänden rückgestreute Echosignale. Es handelt sich hierbei somit um eine gattungsfremde Primärradar-Anordnung. EP 0550073 B1 beschreibt gleichermaßen eine Ortsbestimmung einzelner Objekte mittels Laufzeitmessung durch Erfassung von Echosignalen sämtlicher beleuchteter Streuer. Auch hier handelt es sich um eine Primärradar-Anordnung.

DE 195 12 787 beschreibt ein Verfahren mit synthetischer Apertur zur Ortung von Strahlungsquellen. Es handelt sich hierbei also gattungsfremd nicht um ein Radar, sondern um einen Signal-Detektor/Empfänger. Der Detektor, der das Signal einer Strahlungsquelle erfasst, umfasst zwei räumlich getrennte Antennen. Der Phasenunterschied zwischen den beiden Signalen der beiden Antennen, welcher sich letztendlich aus dem Winkel zwischen der Antennenebenen und dem Ziel ergibt, wird in mehreren nacheinander folgenden Messungen bestimmt und dann nach einem synthetischen Apertur-Prinzip verrechnet.

Es ist Aufgabe der vorliegenden Erfindung ein Ortungssystem gemäss dem Oberbegriff des Hauptanspruchs derart weiterzubilden, dass eine hohe Messgenauigkeit erreicht und insbesondere eine Messwertverfälschung infolge weiterer Reflektionen reduziert wird, die zusätzlich zu den direkten Signalübertragungswegen zwischen mobilen und ortsfesten Stationen erzeugt werden.

Die Aufgabe wird durch ein Verfahren gemäss dem Hauptanspruch 1 und durch eine Vorrichtung gemäss dem nebengeordneten Anspruch 14 gelöst. Weitere vorteilhafte Ausgestaltungen finden sich in den Unteransprüchen.

Durch das beanspruchte Verfahren wird durch mittels Messdaten einer Absolutsensorik und einer Relativsensorik erfolgendes Erfassen einer von einer Ausgangsposition ausgehenden, dem Aufspannen einer synthetischen Apertur dienenden Bewegung der mobilen Station die Apertur bzw. die räumliche Ausdehnung insbesondere deren Antenne mittels der Relativsensorik mathematisch vergrössert und damit eine synthetische Apertur erzeugt. Die vorliegende Erfindung beschreibt nun neuartige Hybrid-Ortungssysteme und -verfahren, bei denen die Messdaten von Funkortungssystemen auf besonders vorteilhafte Weise mit Hilfe von Messdaten einer assistierenden Relativsensorik kombiniert werden, bevor sie der weiterführenden Verarbeitung zugeführt werden. Durch die Verfahren gelingt es, Störungen durch Multipath-Effekte sehr effektiv zu verringern und damit eine nahezu optimale Kombination von einer Relativsensorik mit einer funkbasierten Absolutsensorik darzustellen.

Die vorliegende Erfindung bezieht sich insbesondere auf so genannte TOA (time of arrival) bzw. RTOF (round trip time of flight) Funkortungssysteme. Bei den TOA Systemen - etwa GPS - wird durch eine Einweg-Laufzeitmessung zwischen zwei Stationen, bei RTOF durch eine Zwei-Wege-Laufzeitmessung zwischen den Stationen der Abstand zwischen den Stationen bestimmt wird. Besonders günstige Ausführungsformen derartiger Systeme finden sich in der einschlägigen Literatur zu GPS-Systemen oder in US 5216429, US 5748 891, US 6054950, GB 1605409, DE 3324693, WO200167625 und insbesondere in den Siemens Anmeldungen PCT/DE00/03356, DE 19946168.6, DE 10155251.3, DE 10208479.3, DE 10 2004 017 267.6 oder 10 0584 180.1 auf die hier voll inhaltlich Bezug genommen wird [2].

Im Speziellen ist eine Absolutsenorik bzw. Funkmesstechnik so ausgeführt, dass sie zu Messsignalen führt, welche die Amplitude und die Phase des übertragenen Signal in Abhängigkeit von der Signallaufzeit bzw. in Abhängigkeit von der Länge des Übertragungsweges darstellt, wie dies üblicherweise bei fast allen Radarsystemen der Fall ist. Ob die Darstellung über der Zeit kontinuierlich, diskret oder nur anhand von einer begrenzten Anzahl von Wertepaaren (komplexer Amplitudenwert, Zeit) dargestellt wird, ist nebensächlich. Zur Vereinfachung werden insbesondere alle denkbaren TOA- oder RTOF-Funkortungs-Messbaugruppen, die derartige Antwortsignale liefern, hier unter dem Begriff Sekundärradar zusammengefasst. TOA Systeme stellen natürlich im klassischen Sinn kein Sekundärradar dar, aber die Signale in den TOA-System-Empfangsstationen sind üblicherweise bzgl. Aussehen und Informationsgehalt gleichartig zu den Signalen in Sekundärradaren, weshalb aus Informations- und Systemtechnischer Sicht eine gemeinsame Betrachtungsweise sinnvoll ist.

Das Messsignal eines solchen Sekundärradars (also eines TOA oder RTOF-Systems) wird im Folgenden unabhängig von der Detail-Signalart als Messsignal oder Echoprofil bezeichnet. Verschiedene Betrags-Maxima oder Werte in einem Echoprofil sind verschiedenen Übertragungswegen mit unterschiedlichen Signallaufzeiten zuzuordnen. Mittels einer Relativsensorik kann die Richtung und der Betrag einer Positionsänderung relativ zur ursprünglichen Position einer mobilen Station quantifiziert werden.

Das erfindungsgemäße Verfahren basiert auf dem Verfahren der synthetischen Apertur. Das allgemeine Prinzip von SAR (synthetic aperture radar) ist zum Beispiel im Fachbuch "H. Radar mit realer und synthetischer Apertur" von Klausing und W. Holpp (Oldenbourg, 2000) in Kapitel 8, S. 213 ff. ausführlich dargestellt [3]. Nahezu identische Verfahren sind im Bereich der Medizin oder Ultraschallmesstechnik unter den Begriffen Holographie bzw. Tomographie bekannt. Zur Beschreibung der letzteren Verfahren sei zum Beispiel auf "M. Vossiek, V. Mágori und H. Ermert, "An Ultrasonic Multielement Sensor System for Position Invariant Object Identification", presented at IEEE International Ultrasonic Symposium, Cannes, France, 1994, verwiesen [4]. Erfindungsgemäß werden die bekannten Verfahren mit synthetischer Apertur zum Zweck einer funkbasierten Ortung dahingehend erweitert, dass nicht passiv an beliebigen Objekten störend reflektierte Signale zu einem Bild verarbeitet werden, sondern dass lediglich aktiv reflektierte Signale, die von unterschiedlichen Messpositionen aufgenommen wurden, überlagert werden und dann zum Zwecke einer Funkortung dienen.

Gemäß einer vorteilhaften Ausführungsform erfolgt ein Verwenden der synthetischen Apertur durch geeignetes Auswählen der Größe der Apertur und/oder der Amplituden-und/oder Phasengewichtung der Messdaten der Absolutsensorik zum Erzeugen eines Richtverhaltens der synthetischen Apertur derart, dass deren Richtdiagramm nahezu homogen im Bereich einer Fehlerellipse der Absolutsensorik liegt. Das Richtdiagramm liegt nahezu homogen im Bereich einer Fehlerellipse einer vorherigen Positionsmessung, die mit beliebigen Mitteln ausgeführt wurde.

Gemäß einer weiteren vorteilhaften Ausführungsform erfolgt ein alternatives Verwenden der synthetischen Apertur durch von einer bekannten Position der ortsfesten Station auf unbekannte Positionen der mobilen Station erfolgendes Zurückrechnen bzw. Abbilden mittels eines Verfahrens der synthetischen Apertur, insbesondere mittels eines breitbandholographischen Abbildungsverfahrens. Mittels eines derartigen Verfahrens wird zu einem Abstandsmesswert zusätzlich ein Winkelmesswert erzeugt.

Gemäß einer weiteren vorteilhaften Ausführungsform erfolgt ein alternatives Verwenden der synthetischen Apertur durch ein Zurückrechnen bzw. Abbilden bekannter Positionen der mobilen Station auf eine unbekannte Position der ortsfesten Station.

Gemäß einem vorteilhaften Verfahren bzw. einer vorteilhaften Vorrichtung werden Entfernung und Winkelinformation zwischen mobiler Station, insbesondere einem Sekundärradar, und ortsfester Station, insbesondere einem Transponder berechnet. Die Verfahrensschritte werden durch entsprechend bereitgestellte Einrichtungen ausgeführt.

Gemäß einem vorteilhaften Verfahren bzw. einer vorteilhaften Vorrichtung werden die Entfernungs- und Winkeldaten eines oder mehrerer mobiler Stationen, insbesondere des oder der Transponder im Sekundärradar, mittels eines Kalman-Filters für eine oder mehrere Positionen fusioniert. Die Verfahrensschritte werden durch entsprechend bereitgestellte Einrichtungen ausgeführt.

Gemäß einem vorteilhaften Verfahren bzw. einer vorteilhaften Vorrichtung werden die ortsfesten Stationen, insbesondere Transponder, als passive Backscattertags ausgeführt und eine absolute Positionsbestimmung nach Entfernung und Winkel erfolgt relativ zum Sekundärradar. Die Verfahrensschritte werden durch entsprechend bereitgestellte Einrichtungen ausgeführt.

Gemäß einer vorteilhaften Ausführungsform erfolgt ein Wiederholen der Schrittfolgen zur Verbesserung der Positionsbestimmung der mobilen Station.

Gemäß einer vorteilhaften Ausführungsform erfolgt ein anfängliches grobes Fokussieren mittels eines Messwertes der Absolut-und/oder der Relativ-Sensorik.

Gemäß einer vorteilhaften Ausführungsform erfolgt ein anfängliches grobes Fokussieren mittels Informationen vorangegangener Messdaten.

Gemäß einer vorteilhaften Ausführungsform wird zum Zurückrechnen bzw. Abbilden von einem Punkt $b(x, y, z)$ der ersten, insbesondere ortsfesten, Station das gemessene Empfangssignal $E_n(\omega)$ mit der theoretischen Funktion $F_n(a_n, r, \omega)$ korreliert, die eine erste, insbesondere ortsfeste, Station, die ideal als punktförmiger Reflektor angenommen wird, an der Position $r = (x, y, z)^T$ vom Messpunkt $a_n = (x_{n'} \ y_{n'} \ z_n)^T$ der zweiten, insbesondere, mobilen Station aus betrachtet erzeugen würde.

Eine vorteilhafte Vorrichtung zur Erhöhung der Messgenauigkeit eines eine mobile und mindestens eine ortsfeste Station aufweisenden funkbasierten Ortungssystems überlagert die von mehreren unterschiedlichen Übertragungswegen stammenden Echoprofile zumindest eines Sekundärradars unter Zuhilfenahme mehreren unterschiedlichen dazugehörigen Positionsdaten der Relativsensorik zur Erzeugung einer synthetischen Apertur in Form einer virtuellen Antenne.

Gemäß einer vorteilhaften Ausführungsform sind mindestens zwei ortsfeste Stationen bereit gestellt, so dass Lateralisationsdaten erzeugt werden können.

Gemäß einer vorteilhaften Ausführungsform ist die mobile Station durch ein Sekundärradar und die mindestens eine ortsfeste Station durch einen Transponder ausgebildet, so dass ein "self-positioning"-System erzeugt ist.

Gemäß einer vorteilhaften Ausführungsform sind die mobile Station durch einen Transponder und die mindestens eine ortsfeste Station durch ein Sekundärradar ausgebildet, so dass ein "remote-positioning"-System erzeugt ist.

Gemäß einer vorteilhaften Ausführungsform ist eine Datenübertragungseinrichtung zur Übertragung von Daten von mindestens einem Sekundärradar zur Signalverarbeitungseinrichtung bereit gestellt.

Die vorliegende Erfindung wird anhand von Ausführungsbeispielen unter Bezugnahme auf die Figuren beispielhaft beschrieben. Es zeigen:

Fig. 1 ein erstes Ausführungsbeispiel zur Positions- bestimmung (self positioning);

Fig. 2 ein zweites Ausführungsbeispiel zur Positions- bestimmung (self positioning);

Fig. 3 eine Darstellung zur Positionsabbildung mit- tels eines breitbandholographischen Abbil- dungsverfahrens;

Fig. 4 ein viertes Ausführungsbeispiel zur Positions- bestimmung (remote positioning);

Fig.5 eine Darstellung zur Abschätzung der Auflösung breitbandholographischer Verfahren;

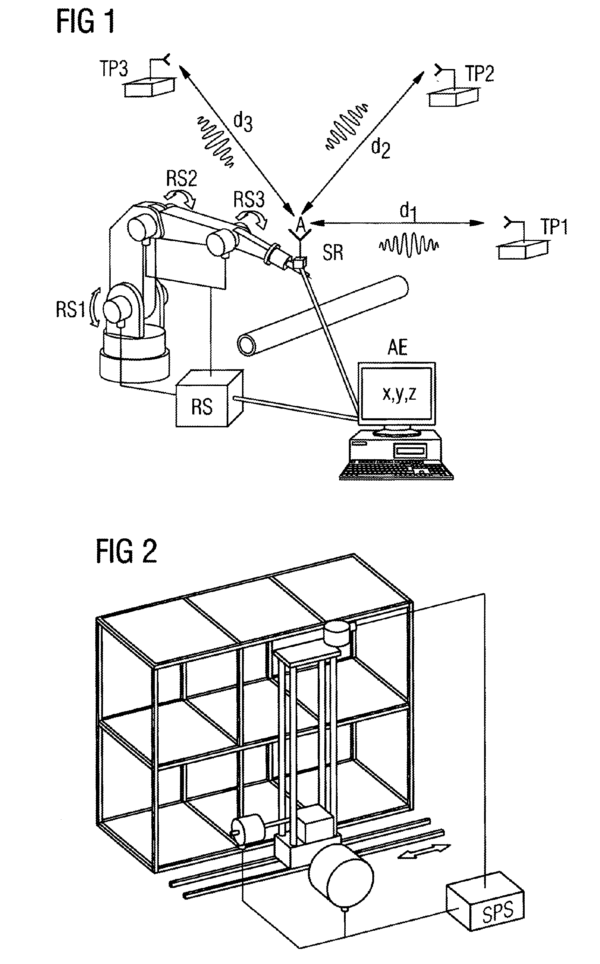

Dargestellt werden die erfindungsgemäßen Verfahren anhand einer Sensorik zur Positionierung von Roboterarmen. Figur 1 zeigt einen derartigen typischen Roboter. Fig. 1 zeigt ein erstes Ausführungsbeispiel zur Positionsbestimmung mittels eines "Self positioning"-Systems, anhand dessen sich auf einfache Weise ein Verfahren zur Erhöhung der Messgenauigkeit eines Funkortungssystems beschreiben lässt. Bei "Self-positioning" Systemen befindet sich die eigentliche Messeinheit Sekundärradar SR im mobilen Gerät bzw. in der mobilen Station, so dass das mobile Gerät also seine eigene Position bestimmt. Ortsfeste Stationen sind mittels Transponder TP ausgebildet. Per Funkkommunikation könnten die Positions-Informationen der anderen, nicht messenden Seite zur Verfügung gestellt werden. AE bezeichnet eine Auswerteeinheit. Abstände sind mit d bezeichnet. A ist eine Antenne.

In Figur 1 ist eine derartige Auslegung dargestellt, bei der sich das Sekundärradar SR auf dem mobilen Objekt - also hier zum Beispiel an dem Greifer des Roboterarms - befindet. Es sind drei Transponder TP als ortsfeste Stationen bereitgestellt. Der Roboter sei zudem durch eine Relativsensorik RS - zum Beispiel mit mehreren Winkelencoder RS1, RS2, RS3 an jedem Gelenk ausgerüstet, so dass die Richtung und der Betrag einer Positionsänderung relativ zur ursprünglichen Position quantifiziert werden kann.

Das Verfahren lässt sich anhand eines so genannten "Self-positioning" Systems beschreiben. Für eine absolute Positionierung sind die heutzutage in einem vernünftigen Kostenrahmen verfügbaren Drehgeber nicht ausreichend genau, da sich ihre Fehler über größere Verfahrwege akkumulieren. Zudem gibt es häufig Ungenauigkeiten aufgrund von mechanischen Verformungen. Typische Geräte/Systeme mit Relativsensoren liefern daher

1) eine gute Wiederholgenauigkeit,

2) eine sehr gute Genauigkeit bezüglich kleiner Positionsänderungen,

3) jedoch schlechte absolute Positionswerte bei freien Bewegungen über einen größeren Bereich.

Speziell das letztere Problem 3) wird durch die vorliegende Erfindung durch die Ausnutzung von der Eigenschaft 2) in Verbindung mit einem wie zuvor beschriebenen Funkortungssystem gelöst.

Erfindungsgemäß wird die Eigenschaft 2) dahingehend ausgenutzt, dass durch die Bewegung des mobilen Systems eine synthetische Apertur aufgespannt wird. Entscheidend ist hierbei, dass es hierzu nicht notwendig ist, die absolute Position der Antenne A des Sekundärradars SR zu kennen - es reicht zur Berechnung einer synthetischen Apertur aus die Relativ-Koordinaten der Aperturstützpunkte zu einem beliebigen Bezugspunkt (zum Beispiel dem Startpunkt der Messung) zu kennen - gerade diese Information liefern aber verschiedenste Relativsensoren in vorteilhafter Weise.

Wenn man mit dem Sekundärradar in Verbindung mit der Bewegung eine synthetische Apertur aufgespannt hat, ist es möglich, nachträglich auf rechnerischem Wege vergleichsweise sehr richtscharf (verglichen mit der nahezu ungerichteten Wellenausbreitung bei einer üblichen Funkortungs-Einzelmessung) das Funksignal auf einen nahezu beliebigen Punkt im Raum zu fokussieren - das heißt es wird rechnerisch eine Situation erzeugt, als ob man mit einer richtscharfen physikalischen Antenne zum Transponder gemessen hätte. Es ist bekannt, dass die Verwendung von richtscharfen Antennen zu eine signifikanten Verringerung der Mehrwegeproblematik führt.

Da die Position des Transponders zunächst unbekannt ist, ist es im Allgemeinen nicht möglich unmittelbar den Fokus rechnerisch auf den Transponder einzurichten. Erfindungsgemäß wird eine synthetischen Apertur gemäß zweier Alternativen verwendet.

Alternative 1

Durch die verwendete Sensorik, das heißt die Relativsensorik und/oder die Funkortungssensorik bzw. Absolutsensorik in einer Grundausführung nach dem Stand der Technik, ist es in aller Regel möglich, die Position des Transponders zumindest grob zu bestimmen. Gemäß der ersten Alternative ist eine typische Fehlerellipse abschätzbar, die den zu erwartenden Fehlerbereich der Ortungsmessung charakterisiert. Folglich kann man mit einer gewissen Sicherheit davon ausgehen, dass sich der Transponder irgendwo innerhalb eines Raumsektors, der durch den Messwert und die Fehlerellipse beschrieben wird, aufhält. Es wird nun die Sende-/Empfangsrichtung der synthetischen Apertur rechnerisch auf den zuvor grob gemessenen Aufenthaltsort des Transponders ausgerichtet. Durch eine geeignete Wahl der Größe der Apertur und gegebenenfalls durch geeignete Amplitudengewichtung der Messsignale wird ferner dafür gesorgt, dass das Richtdiagramm der synthetischen Apertur nahezu homogen im Bereich der Fehlerellipse ist und so vorzugsweise im Winkelbereich neben der Fehlerellipse stark abklingt und dort nur geringe Nebenmaxima hat. Wie durch die Größe der Apertur sowie durch Amplituden- und Phasengewichtung der empfangenen Signale bei einer synthetischen Apertur ein bestimmtes Richtverhalten erzeugt wird, ist dem Experten - zum Beispiel durch die oben aufgeführte Literatur - bekannt. Es wird also eine virtuelle Antenne generiert, die so richtscharf wie möglich, aber so ungerichtet wie aufgrund der unscharfen, fehlerbehafteten Vorinformation nötig, auf den Transponder gerichtet wird. Die Erhöhung der Richtschärfe der Funkübertragung führt zu einer signifikanten Verringerung der Multipath-Fehler. Die "verbesserten" Messsignale, die mit Hilfe der synthetischen Apertur erzeugt werden, können dann ganz normal einer üblichen übergeordneten Ortungs-Algorithmik nach einem bekannten Stand der Technik zugeführt werden. Das beschriebene Verfahren muss für eine räumliche Ortung auf mindestens zwei Transponder angewendet werden, um die notwendigen Lateralisationsdaten zu bekommen. Um die Vorinformation zu verbessern - also um noch richtschärfer fokussieren zu können - wäre es denkbar, Informationen von zurückliegenden Messungen heranzuziehen. Die Vorhersage des erwarteten neuen Aufenthaltsortes könnte zum Beispiel mit Hilfe eines Kalman-Filters erfolgen, ebenso die Abschätzung der Größe der Fehlerellipse.

Alternative 2

Die zweite Version der Position des Transponders zu bestimmen besteht darin, eine Art Bildgebung durchzuführen. Das heißt mit Hilfe des bewegten Sekundärradars werden alle im Raum befindlichen Transponder in einem Bildbereich $b(x, y, z)$ abgebildet. Da der Bildbereich einen bekannten Bezug zur Position des Sekundärradars hat, wird durch die Abbildung der Transponder unmittelbar die relative Lage des Sekundärradars zu den Transpondern (die sich an konstanten Positionen befinden) bestimmt und somit auf seine absolute Lage im Raum geschlossen. Vorteilhaft ist hierbei, dass es theoretisch bei einer geeigneten zweidimensionalen Bewegung des Sekundärradars ausreicht, nur einen Transponder abzubilden, um die 3D-Position des Sekundärradars zu bestimmen. Dies kann für Applikationen, bei denen es aus Kosten- oder Abdeckungsgründen nicht möglich ist, eine gute Trilateralisationsbasis aufspannen, sehr vorteilhaft sein. Wenn anhand der Bildgebung die Entfernung und Richtung von mehreren Transpondern zum Sekundärradar bestimmt werden, könnten diese Werte ganz normal einer üblichen übergeordneten Ortungs- Algorithmik nach einem beliebigen Stand der Technik zugeführt werden. Zur Abbildung der Transponder können alle bekannten bildgebenden synthetischen Apertur-Verfahren und -algorithmen Anwendung finden.

In Figur 2 ist zur Veranschaulichung eine weitere ähnlich gelagerte Ortungsapplikation dargestellt. Darüber hinaus sind die erfindungsgemäßen Anordnungen und Verfahren aber auch auf ganz andere Applikationen wie etwa die Ordnung von Fahrzeugen, Gabelstapler, Kräne, Personen von mobilen Endgeräten wie Handys, Laptops u.v.a.m. direkt übertragbar.

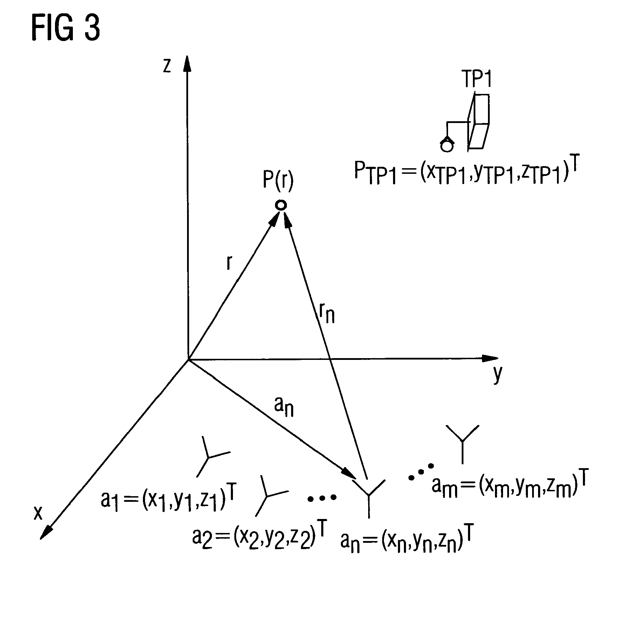

Zur Abbildung der Transponder TP können alle bekannten bildgebenden synthetischen Apertur-Verfahren und -algorithmen Anwendung finden und auf die vorliegende Anwendung übertragen werden. Als Ausführungsbeispiel wird im Folgenden eine Variante mit dem so genannten breitbandholographischen Abbildungsverfahren dargestellt. Zur Erläuterung der Aufnahmesituation dient Figur 3.

Wie schon aufgezeigt wurde, erfolgt die Datenaufnahme derart, dass jeweils ein Sekundärradar ein Signal von der Position $a_n = (x_n, y_n, z_n)^T$ emittiert. Aus Gründen der Überschaubarkeit wird zunächst davon ausgegangen, dass das Sekundärradar das vom Transponder zurückgesendete Signal an der selben Position $a_n$ empfängt. Eine Übertragung auf eine Anordnung mit getrennter Sende- und Empfangsantenne wäre - zum Beispiel mit Hilfe der oben aufgeführten Literatur - leicht möglich. Ein derartiger Messvorgang soll nun von M verschiedenen Messpositionen *($a_n$ mit n = 1 ...M)* durchgeführt werden. Folglich führt die Messung zu einer Gruppe von M unterschiedlichen Messsignalen (Echoprofilen), die im Folgenden $e_n(t)$ bzw. das zugehörige Spektrum $E_n(\omega)$ genannt werden.

Die wahre und durch die Messung in idealer Weise zu bestimmende Position des Transponders sei $P_{TP1} = (X_{TP1}, y_{TP1}, Z_{TP1})^T$.

Für eine kompakte Darstellung wird von weiteren Vereinfachungen ausgegangen:

- Der Messbereich in dem sich der Transponder aufhalten kann, sei auf einen Raumbereich begrenzt, in dem sichergestellt ist, dass der Transponder von allen Positionen $a_n$ vom Sekundärradar erfasst werden kann.
- Es wird im folgenden von einem gleichförmigen, konstanten nicht richtungsabhängigen Richtverhalten aller Antennen ausgegangen.
- Die Basis zur Modellierung des Übertragungskanals sei ein idealer AWGN-Kanal. Das heißt, das vom Radar empfangene Echoprofil $e_n(t)$ kann mit einem Modell beschrieben werden, bei dem sich das Empfangssignal als lineare Superposition von P amplitudengewichteten und zeitverzögerten Sendesignalen ergibt, wobei der Index p die verschiedenen Übertragungswege (direkter Weg und Multipath-Umwege) vom Sekundärradar zum Transponder und zurück kennzeichnet.

$$e_n\left( t = \alpha_n \cdot \sum_{P=1}^{P} \alpha_p \cdot s\left(t - \tau_n - \tau_p\right) + n(t) \right)$$

$\alpha_n$ sei eine für jeden Messweg n charakteristische Dämpfungskonstante.

$\alpha_p$ soll zudem die über die normale Grunddämpfung hinausgehende Dämpfung für jeden der *p* Übertragungswege berücksichtigen.

$\tau_n$ sei die für den Messweg *n* charakteristische Signallaufzeit (das heißt die Signallaufzeit vom direkten, kürzesten Weg vom Sekundärradar zum Transponder und zurück).

$\tau_p$ soll zudem mögliche Laufzeitverlängerungen aufgrund von Mehrfachreflexionen für jeden der *p* Übertragungswege berücksichtigen.

*n(t)* beschreibt additiv überlagerte Störungen (additive white Gaussian noise AWGN).

Transformiert man die Gleichung zum Übertragungsmodell in den Frequenzbereich, so ergibt sich:

$$E_n(\omega) = \alpha_n \cdot \sum_{p=1}^{P} \alpha_p \cdot S(\omega) \cdot e^{-j \cdot \omega \cdot \tau_n} \cdot e^{-j \cdot \omega \cdot \tau_p} + N(\omega).$$

Die Grundlaufzeit $\tau_n$ zu einem beliebigen Raumpunkt $r = (x, y, z)^T$ und zurück berechnet sich gemäß:

$$\tau_n = \frac{2\,|r_n|}{c}$$

und

$$|r_n| = |r - a_n| = \sqrt{(x - x_n)^2 + (y - y_n)^2 + (z - z_n)^2}\,,$$

wobei c die Ausbreitungsgeschwindigkeit der Welle ist.

Der breitbandholographische Rekonstruktionsalgorithmus basiert auf einer Art Optimalfilterung. Zur Berechnung eines Bildpunktes $b(x, y, z)$ wird das gemessene Empfangssignal $E_n(\omega)$ mit der theoretischen Funktion $F_n(a_n, r, \omega)$ korreliert, die ein Transponder, der ideal als punktförmiger Reflektor angenommen wird - an der Position $r = (x, y, z)^T$ vom Messpunkt $a_n = (x_n, y_n, z_n)^T$ betrachtet erzeugen würde. Diese Korrelation/Vergleichsfunktion liefert nur dann einen großen Wert, sofern das Empfangssignal dem theoretischen Signal ähnelt, was dann der Fall ist, wenn sich an der Position r tatsächlich ein Transponder befindet, also der angenommene Bildpunkt r tatsächlich der Position des Transponders $P_{TP1} = (X_{TP1}, Y_{TP1}, Z_{TP1})^T$ entspricht.

Durch Summation der Korrelationsergebnisse für alle M Messwege ergibt sich eine Art Wahrscheinlichkeitswert, der aussagt, ob an der Position r ein Transponder vorhanden bzw. nicht vorhanden ist. Die Rekonstruktionsvorschrift lautet somit:

$$b(x, y, z) = \left| \sum_{n=1}^{M} \int E_n(\omega) \cdot F_n^{-1}\big(a_n, r = (x, y, z)^T, \omega\big)\, d\omega \right|.$$

Das hier zum Signalvergleich (nach Art einer Korrelation) gewählte inverse Filter entspricht bezüglich des exponentiellen Ausbreitungsterms dem üblicherweise verwendeten Matched-Filter-Ansatz (das heißt Multiplikation mit dem konjugiert komplexen Signal, also $F_n^*(a_n, r, \omega))$. Basierend auf dem zuvor beschriebenen Übertragungsmodell und unter Vernachlässigung der additiven Störungen, ergibt sich das Signal $F_n(a_n, r, \omega)$ eines fiktiven Transponders in r zu:

$$F_n(a_n, r, \omega) = \sum_{p=1}^{P} \alpha_n \cdot \alpha_p \cdot S(\omega) \cdot e^{-j \cdot \omega \cdot \tau_n} \cdot e^{-j \cdot \omega \cdot \tau_p}$$

Im Weiteren wird noch angenommen, dass das Sendesignal $S(\omega = 1)$ ist, was ohne Einschränkung der Allgemeingültigkeit möglich ist, da etwaige nichtideale Eigenschaften des Sendesignals - zumindest im interessierenden Übertragungsbereich - durch den oben dargestellten Ansatz des inversen Filters kompensiert werden könnten.

Setzt man diese Signalhypothese nun in die oben eingeführte Rekonstruktionsvorschrift ein, so folgt:

$$b(x, y, z) = \left| \sum_{n=1}^{M} \int E_n(\omega) \cdot \sum_{p=1}^{P} \alpha_n \cdot \alpha_p \cdot e^{j \cdot \omega \cdot (\tau_n + \tau_p)}\, d\omega \right|.$$

Substituiert man $\tau_n + \tau_p$ durch t und zieht die Summe über $p$ vor das Integral, so erkennt man, dass das Integral über die Kreisfrequenz $\omega$ einer inversen Fouriertransformation entspricht und somit das Empfangssignal zum Zeitpunkt

t = $\tau_n$ + $\tau_p$ liefert. Da die Signalumwege $\tau_p$ bis auf den direkten Weg, bei dem $\tau_p$ = 0 ist, unbekannt sind, wird das Signalmodell auf diesen Weg reduziert. Die endgültige Rekonstruktionsvorschrift lautet demzufolge:

$$b(x, y, z) = \left| \sum_{n=1}^{M} e_n(t = \tau_n) \right|$$

Anzumerken ist, dass etwaige reelle Empfangssignale vor der Summation zu einem komplexen Signal erweitert werden müssen, um so die Hüllkurve der Bildfunktion, also eine Art "Helligkeitsfunktion" bestimmen zu können. Die Berechnung des komplexen Signals kann mit Hilfe der Hilbert-Transformation erfolgen.

Der gewonnene Ausdruck lässt sich sehr anschaulich interpretieren. Befindet sich tatsächlich ein Transponder an der Position $r$, so tritt sein Antwortsignal in den Echoprofilen $e_n(t)$ jeweils beim Zeitpunkt $t = \tau_n$ auf. Durch die laufzeitrichtige Summation über die M Messwege werden seine Signalbeiträge durch die Rekonstruktionsvorschrift kohärent überlagert, so dass sich ein großer Wert für $b(x, y, z)$ ergibt. Etwaige Signalanteile anderer, nicht in r positionierter Transponder, Signalanteile von Mehrwegreflexionen oder Rauschen überlagern sich dagegen, wegen der nicht konsistenten Laufzeiten, inkohärent und führen somit zu einem wesentlich kleineren Bildsignal. Um sicher sein zu können, dass eine inkohärente Superposition mehrerer Echosignale zu einer kleinen Amplitude führt, ist zu fordern, dass die Anzahl der Messpunkte M nicht zu klein gewählt ist.

Es ist leicht zu zeigen, dass fast alle im Laufe der Herleitung gemachten Vereinfachungen nicht notwendig sind und somit auch reale nicht-ideale Systemeigenschaften relativ einfach berücksichtigt werden könnten, wenn dies notwendig sein sollte. So könnten zum Beispiel ein ortsabhängiges Richtverhalten der Radar-Antenne und eine frequenzabhängige Übertragungsfunktion des Messsystems durch ein inverses Filter berücksichtigt werden.

Ein interessanter Nebeneffekt des Verfahrens der Variante 2) ist, dass es nicht zwangsläufig nötig ist, die Transponder im Zeit-, Frequenz- oder Codemultiplex zu betreiben. Bei normalen Funkortungssystemen ist dies notwendig, um auszuschließen, dass sich Transpondersignale gegenseitig stören bzw. die Überlagerung mehrerer Transpondersignale in der Messstation zu fehlerhaften Ergebnissen führt. Das erfindungsgemäße Verfahren liefert inhärent ein so genanntes space-devision multiple access. Folglich können, wenn die Transponder örtlich so weit voneinander entfernt sind, dass sie durch die synthetische Apertur örtlich in der Abbildung getrennt aufgelöst werden, so sind die auch ohne eine weitere Codierung unterscheidbar.

Bisher ist bei den Ausführungen von einer "Self-positioning" Anordnung ausgegangen worden. Da es sich bei dem erfindungsgemäßen Verfahren immer um eine relative Zuordnung der Koordinaten des Radars und der Transponder handelt, ist es sofort offensichtlich, dass die Anordnung auch zu einem remote positioning System umgedreht werden kann.

Ein Verfahren zur Positionsbestimmung eines ortsfesten Sekundärradars ist dabei bestimmt durch ein vorangehendes grobes Bestimmen der absoluten Position mindestens eines Sekundärradars mittels Bestimmen dessen relativer Position zu der absoluten Position eines angehaltenen einzigen Transponders nach einer Abbildung aller Sekundärradars in einem Bildbereich mittels Bewegung des Transponders, Bestimmen der relativen Position des angehaltenen Transponders zu den sich konstant an bekannten Positionen befindlichen Sekundärradars und darauf beruhendes Abschätzen der absoluten Position des angehaltenen Transponders.

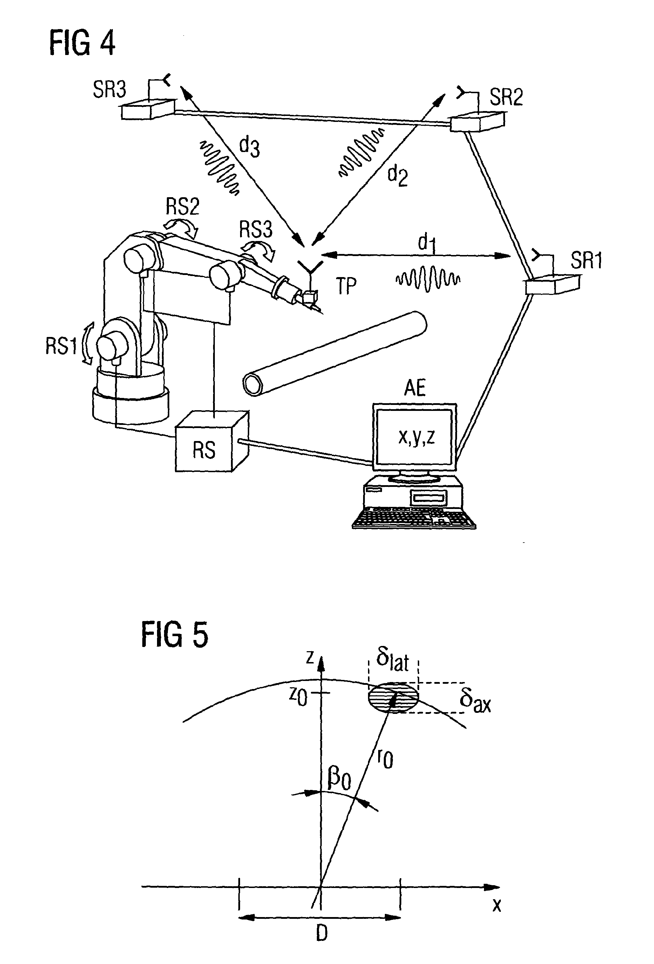

Figur 4 zeigt ein weiteres mögliches Ausführungsbeispiel eines Funkortungssystems, dessen Messgenauigkeit mittels eines erfindungsgemäßen Verfahrens erhöht wird. Fig. 4 zeigt im Unterschied zu Fig. 1 ein "Remote-positioning"-System. Bei "Remote-positioning" Systemen verfügen ortsfeste Stationen über Messeinheiten (SR) und bestimmen somit dann von außen die Position des mobilen Geräts bzw. der mobilen Station (TP). Per Funkkommunikation könnten ebenso bei diesem System die Positions-Informationen der anderen, nicht messenden Seite zur Verfügung gestellt werden.

Im vorliegenden Fall muss die Information der Relativsensorik zu den ortsfesten Sekundärradaren übertragen werden, bzw. die Sekundärradare müssen ihre Echoprofile zu einer zentralen Auswerteeinheit Anmeldeunterlagen erstellen übertragen, wobei die Auswerteeinheit mit Hilfe der Information der Relativsensorik eines der oben genannten Verfahren durchführt.

Im Folgenden sollen nun noch einige Basisformeln zur Dimensionierung des Systems dargestellt werden, wobei die Parameter durch Fig. 5 dargestellt sind.

Da synthetische Apertur-Verfahren auf einer kohärenten Überlagerung von Messsignalen basieren, besteht eine notwendige Bedingung zur Anwendung der Verfahren darin, dass alle Messpositionen $a_n = (x_n, y_n, z_n)^T$ relativ zueinander mit einer Abweichung $\delta_{pos}$ deutlich unterhalb der Größe der Wellenlänge $\lambda$ bekannt sein müssen. Ist diese Bedingung verletzt, ist eine gezielte kohärente Überlagerung der Signale nicht mehr möglich. Eine übliche Forderung ist zum Beispiel:

$$\delta_{Pos} < \frac{\lambda}{8} < \frac{c}{f_m \cdot 8} \,,$$

wobei $f_m$ die Mittenfrequenz des Messsignals bezeichnet.

Zur Abschätzung der zu erwartenden Auslösung breitbandholographischer Verfahren findet man in der Literatur die folgenden Angaben.

Die laterale Auflösung (zur Erläuterung s. Figur 5) beträgt ca.

$$\delta_{lat} \sim \frac{z_0 \cdot c}{D \cdot f_m} \,,$$

die axiale Auflösung (zur Erläuterung siehe Figur 5) beträgt etwa

$$\delta_{ax} \sim \frac{c}{\Delta f} \,,$$

wobei die verwendeten Variablen wie folgt definiert sind:

$Z_0$: mittlerer Abstand von der Aperturebene zum Aufnahmebereich,
$D$ : Länge der Apertur,
$C$ : Wellenausbreitungsgeschwindigkeit,
$f_m$ : Mittenfrequenz der Messsignale,
$\Delta f$ : Bandbreite der Messsignale.

Im Folgenden werden die Kenngrößen für ein System, das bei der Mittenfrequenz 5.8 GHz und mit einer Bandbreite von 100 MHz arbeitet und das für eine Roboteranwendung wie etwa in Figur 1 dargestellt eingesetzt werden soll, betrachtet: Der Arbeitsbereich des Roboters sei auf einen Raumbereich begrenzt, bei dem $Z_0$ maximal 4 m betragen soll. Durch die Bewegung des Roboterarms soll zum Beispiel eine synthetische Apertur von 20 cm aufgespannt werden.

In dem vorliegenden Fall ist die erzielte laterale Auflösung von ca. 1 m schon deutlich besser als die axiale Auflösung. Letztere ist bei üblichen Funkortungssystemen nach dem Laufzeitprinzip eine der maßgeblichen Kenngrößen. Berücksichtigt man, dass die Genauigkeit der Positionsbestimmung durch Interpolationsverfahren typischerweise 1-2 Größenordnungen unterhalb der Auflösungswerte liegt, so lässt sich abschätzen, dass schon eine Messung nach den erfindungsgemäßen Verfahren zur nur einem einzelnen Transponder zu einer Messunsicherheit von nur wenigen cm führt - zumindest dann, wenn der kürzeste, direkte Übertragungsweg mit ausreichendem Pegel vorhanden ist. Durch Kombination von Messungen von einem Sekundärradar zu mehreren Transpondern und/oder Messungen von mehreren Sekundärradaren zu zumindest einem Transponder wäre die Genauigkeit dann noch weiter zu steigern, so dass Messunsicherheiten im Millimeter- oder Sub-Millimeter-Bereich erreichbar sind.

Die Anforderungen an die Messgenauigkeit der Relativsensorik wäre nach den oben dargestellten Formeln absolut $\delta_{pos}$ < 6.5 mm also relativ bezogen auf die Aperturgröße 3%, was für übliche Drehgeber eine moderate Anforderung ist.

Als nächstes wird ein 433 MHz System zur Ortung von Fahrzeugen betrachtet. Der Arbeitsbereich des Fahrzeuges sei auf einen Raumbereich begrenzt, bei dem $Z_0$ maximal 100 m beragen soll. Durch die Bewegung des Fahrzeuges soll zum Beispiel eine synthetische Apertur von 1 m aufgespannt werden. Die Anforderung an die Messgenauigkeit der Relativsensorik läge in diesem Fall ca. < 10 cm also relativ bezogen auf die Aperturgröße von <10%, was mit üblichen Odometern und Lenkungssensoren zu erreichen wäre.

Das letzte Beispiel wäre zum Beispiel auch auf durch Personen getragene mobile Endgeräte (Laptops, WLAN, Bluetooth, Mobilfunkgeräte etc.) zu übertragen. In diesem Fall könnten als Relativsensoren zum Beispiel Beschleunigungssensoren oder Gyros eingesetzt werden.

**Patentansprüche**

1. Verfahren zur Erhöhung der Messgenauigkeit eines eine mobile und mindestens eine ortsfeste Station aufweisenden funkbasierten Ortungssystems,
   **gekennzeichnet durch**

   - mittels Messdaten einer Absolutsensorik und einer Relativ-sensorik (RS) erfolgendes Erfassen einer von einer Ausgangsposition ausgehenden Bewegung der mobilen Station,
   - mittels der Messdaten erfolgendes Erzeugen einer virtuellen Antenne in Form einer synthetischen Apertur aus Relativ-Koordinaten zu einem Bezugspunkt, und
   - auf der Grundlage eines Verwendens der synthetischen Apertur erfolgendes aufeinander Fokussieren der mobilen Station auf die ortsfeste Station und/oder umgekehrt,
   - wobei die Absolutsensorik aus zumindest einem Sekundärradar (SR) und zumindest einem Transponder (TR) erzeugt wird und
   - wobei die Messdaten der Absolutsensorik als von dem zumindest einen Transponder (TR) zurückgesendete Signale von dem zumindest einen Sekundärradar empfangen werden,
   - wobei die mobile Station **durch** das Sekundärradar (SR) und die mindestens eine ortsfeste Station **durch** den Transponder (TR) oder die mobile Station **durch** den Transponder (TR) und die mindestens eine ortsfeste Station **durch** das Sekundärradar (SR) ausgebildet ist.

2. Verfahren nach Anspruch 1,
   **gekennzeichnet durch**
   Verwenden der synthetischen Apertur **durch** geeignetes Auswählen der Grösse der Apertur und/oder der Amplituden- und/oder Phasengewichtung der Messdaten der Absolutsensorik zum Erzeugen eines Richtverhaltens der synthetischen Apertur derart, dass deren Richtdiagramm nahezu homogen im Bereich einer Fehlerellipse einer beliebigen vorherigen Positionsmessung liegt.

3. Verfahren nach Anspruch 1,
   **gekennzeichnet durch**
   Verwenden der synthetischen Apertur **durch** von einer bekannten Position ($P_{TP1}$) der ortsfesten Station auf unbekannte Positionen ($P(r)$) der mobilen Station erfolgendes Zurückrechnen mittels eines Abbildungsverfahrens mit synthetischen Apertur, insbesondere mittels eines breitbandholographischen Abbildungsverfahrens.

4. Verfahren nach Anspruch 1,
   **gekennzeichnet durch**
   Verwenden der synthetischen Apertur **durch** ein Zurückrechnen bekannter Positionen der mobilen Station auf eine unbekannte Position der ortsfesten Station.

5. Verfahren nach einem oder mehreren der Ansprüche 1 bis 4, bei dem Entfernung und Winkelinformation zwischen mobiler Station, insbesondere dem Sekundärradar (SR), und ortsfester Station, insbesondere dem Transponder (TR), berechnet werden.

6. Verfahren Anspruch 5, bei dem die Entfernungs- und Winkeldaten einer oder mehrerer mobiler Stationen, insbesondere des oder der Transponder (TR) im Sekundärradar (SR), mittels eines Kalman-Filters für eine oder mehrere Positionen zusammengefasst werden.

7. Verfahren nach Anspruch 5 oder 6, bei dem die ortsfesten Stationen, insbesondere solche Transponder (TR), als passive Backscattertags ausgeführt sind und eine absolute Positionsbestimmung nach Entfernung und Winkel relativ zur mobilen Station, insbesondere zum Sekundärradar (SR), erfolgt.

8. Verfahren nach einem oder mehreren der vorangehenden Ansprüche 1 bis 7, **gekennzeichnet durch** Wiederholen der Schrittfolge zur Verbesserung der Positionsbestimmung der mobilen Station.

9. Verfahren nach Anspruch 2, **gekennzeichnet durch** ein anfängliches grobes Fokussieren mittels eines Messwertes der Absolut- und/oder der Relativ-Sensorik.

10. Verfahren nach Ansprüchen 2 oder 9, **gekennzeichnet durch** ein anfängliches grobes Fokussieren mittels Informationen vorangegangener Messungen.

11. Verfahren nach einem oder mehreren der Ansprüche 3 bis 10, **dadurch gekennzeichnet, dass** zum Zurückrechnen von einem Punkt b(x, y, z) einer ersten Station das gemessene Empfangssignal $E_n(\omega)$ mit der theoretischen Funktion $F_n(a_n, r, \omega)$ korreliert wird, die eine erste Station, die ideal als punktförmige Wellenquelle angenommen wird, an der Position $r = (x, y, z)^T$ vom Messpunkt $a_n = (x_n, y_n, z_n)^T$ der zweiten Station aus betrachtet erzeugen würde.

12. Verfahren nach Anspruch 11, **dadurch gekennzeichnet, dass** eine Rekonstruktionsvorschrift lautet:

$$b(x, y, z) = \left| \sum_{n=1}^{M} \int E_n(\omega) \cdot \sum_{P=1}^{P} \alpha_n \cdot \alpha_p \cdot e^{j \cdot \omega \cdot (\tau_n + \tau_P)} d\,\omega \right|$$

mit b(x,y,z) einem Punkt der ersten, insbesondere ortsfesten, Station, $E_n(\omega)$ als gemessenem Empfangssignal, $\omega$ als Kreisfrequenz, $\alpha_n$ als eine für jeden Messweg n charakteristische Dämpfungskonstante, $\alpha_p$ als über die normale Grunddämpfung hinausgehende Dämpfung für jeden von p Übertragungswegen, $\tau_n$ als für den Messweg n charakteristische Signallaufzeit, $\tau_p$ als mögliche Laufzeitverlängerungen aufgrund von Mehrfachreflexionen für jeden der p Übertragungswege, p als Positionsindex für Übertragungswege, n als Index für verschiedene Messwege und M als Endlaufindex für Messpositionen.

13. Verfahren nach Anspruch 12, **dadurch gekennzeichnet, dass** eine Rekonstruktionsvorschrift lautet:

$$b(x, y, z) = \left| \sum_{n=1}^{M} e_n(t = \tau_n) \right|$$

mit t als Empfangszeitpunkt.

14. Vorrichtung zur Erhöhung der Messgenauigkeit eines eine mobile und mindestens eine ortsfeste Station aufweisenden funkbasierten Ortungssystems,
    **gekennzeichnet durch**

    a) eine aus mindestens einem Sekundärradar (SR) und mindestens einem Transponder (TR) erzeugte Absolutsensorik,
    b) mindestens eine zur Quantifizierung des Betrages und der Richtung einer Positionsänderung der mobilen Station relativ zu einer ursprünglichen Position bereit gestellte Relativsensorik (RS),
    c) eine Signalverarbeitungseinrichtung zur gemeinsamen Verarbeitung von mittels der Absolutsensorik und der Relativ-sensorik (RS) erfassten Messdaten zum Erzeugen einer virtuellen Antenne in Form einer synthetischen Apertur, wobei die Messdaten der Absolutsensorik als von dem zumindest einen Transponder (TR) als der zumindest einen ortsfesten Station zurückgesendete Signale von dem zumindest einen Sekundärradar als der mobilen Station empfangen werden oder die Messdaten der Absolutsensorik als von dem zumindest einen Transponder als der mobilen Station zurückgesendete Signale von dem zumindest einen Sekundärradar als der zumindest einen ortsfesten Station empfangen werden, und
    d) eine Fokussiereinrichtung zum aufeinander Fokussieren der mobilen Station auf die ortsfeste Station und/ oder umgekehrt auf der Grundlage der synthetischen Apertur.

15. Vorrichtung nach Anspruch 14,
    **dadurch gekennzeichnet, dass**
    mindestens zwei ortsfeste Stationen bereit gestellt sind.

16. Vorrichtung nach Anspruch 14 oder 15,
    **gekennzeichnet durch**
    eine Datenübertragungseinrichtung zur Übertragung von Daten von mindestens einem Sekundärradar (SR) zur Signalverarbeitungseinrichtung.

**17.** Vorrichtung nach einem oder mehreren der vorangehenden Ansprüche 14 bis 16,
**gekennzeichnet durch**
einen Kalmanfilter zur als Vorinformation dienenden groben Voraussage eines Positionswerts einer ortsfesten Station.

**18.** Vorrichtung nach einem oder mehreren der vorangehenden Ansprüche 14 bis 17,
**dadurch gekennzeichnet, dass**
das Ortungssystem ein RTOF (round trip time of flight) oder ein TOA (time of arrival) Funkortungssystem ist.

**Claims**

**1.** Method for increasing the measurement precision of a radio-based locating system comprising a mobile and at least one stationary station,
**characterized by**

- detection of a movement of the mobile station starting from an initial position, ensuing by means of measurement data of an absolute sensor system and of a relative sensor system (RS),
- ensuing by the measurement data generation of a virtual antenna in form of a synthetic aperture by means of relative coordinates to a reference point, and
- on basis of using the synthetic aperture, ensuing one on the other focusing of the mobile station on the stationary station and/or vice versa,
- in which the absolute sensor system is generated from at least one secondary radar (SR) and at least one transponder (TR) and
- in which the measurement data of the absolute sensor system are received by the at least one secundary radar as signals sent back from the at least one transponder (TR),
- in which the mobile station is provided by the secundary radar (SR) and the at least one stationary station is provided by the transponder (TR) or the mobile station is provided by the transponder (TR) and the at least one stationary station is provided by the secundary radar (SR).

**2.** Method according to claim 1,
**characterized by**
use of the synthetic aperture via suitable selection of the size of the aperture and/or the amplitude and/or phase weighting of the measurement data of the absolute sensor system for generation of a direction behaviour of the synthetic aperture in such a manner that its direction pattern lies nearly homogeneous in the range of an error ellipse of an arbitrary preceding position measurement.

**3.** Method according to claim 1,
**characterized by**
use of the synthetic aperture via reverse calculation ensuing from a known position ($P_{TP1}$) of the stationary station to unknown positions ($P(r)$) of the mobile station, ensued by means of an imaging process with synthetic aperture, in particular by means of a broadband-holographic imaging process.

**4.** Method according to claim 1,
**characterized by**
use of the synthetic aperture via reverse calculation of known positions of the mobile station to an unknown position of the stationary station.

**5.** Method according to one or more of the claims 1 to 4, in which distance and angle information are calculated between mobile station, in particular the secondary radar (SR), and stationary station, in particular the transponder (TR).

**6.** Method to claim 5, in which the distance and angle data of one or more mobile stations, in particular of the or these transponders (TR) in the secondary radar (SR), are merged by means of a Kalman filter for one or more positions.

**7.** Method according to claim 5 or 6, in which the stationary stations, in particular such transponders (TR), are provided as passive back-scatter tags and an absolute position determination is ensued depending on distance and angle relative to the mobile station, in particular to the secondary radar (SR).

8. Method according to one or more of the preceding claims 1 to 7, **characterized by** repeating the sequence of steps to improve the position determination of the mobile station.

9. Method according to claim 2, **characterized by** an initial coarse focusing by means of a measurement value of the absolute and/or the relative sensor system.

10. Method according to claim 2 or 9, **characterized by** initial coarse focusing by means of information of preceding measurements.

11. Method according to one or more of the preceding claims 3 to 10, **characterized in that** for reverse calculation of a point $b(x, y, z)$ of a first station the measured receiving signal $E_n(\omega)$ is correlated with the theoretical function $F_n(a_n, r, \omega)$ that a first station, that ideally can be assumed as a punctiform wave source, would generate at the position $r = (x, y, z)^T$ of a measurement point $a_n = (x_n, y_n, z_n)^T$ as seen from the second station.

12. Method according to claim 11, **characterised in that** a reconstruction rule reads:

$$b(x, y, z) = \left| \sum_{n=1}^{M} \int E_n(\omega) \cdot \sum_{P=1}^{P} \alpha_n \cdot \alpha_p \cdot e^{j \cdot \omega \cdot \left( \tau_n + \tau_P \right)} d\,\omega \right|$$

with $b(x,y,z)$ being a point of the first, particularly stationary station, $E_n(\omega)$ as measured receiving signal, $\omega$ as angular frequency, $\alpha_n$ as a for each measurement path n characteristic attenuation constant, $\alpha_p$ as attenuation reaching beyond the normal basic attenuation for each of p transmission paths, $\tau_n$ as for the measurement path n characteristic signal propagation time, $\tau_p$ as possible propagation time extensions due to multiple reflections for each of the p transmission paths, p as position index for transmission paths, n as index for different measurement pathes and M as end running index for measurement positions.

13. Method according to claim 12, **characterised in that** a reconstruction rule reads:

$$b(x, y, z) = \left| \sum_{n=1}^{M} e_n(t = \tau_n) \right|$$

with t as receiving point of time.

14. Apparatus for increasing the measurement precision of a radio-based locating system comprising a mobile and at least one stationary station,
    **characterized by**

    a) an absolute sensor system generated from at least one secondary radar (SR) and at least one transponder (TR),
    b) at least one relative sensor system (RS) provided for quantification of the magnitude and the direction of a change of position of the mobile station relative to an original position,
    c) a signal processing device for common processing of measurement data detected by means of the absolute sensor system and the relative sensor system (RS), for generating a virtual antenna in form of a synthetic aperture, in which the measurement data of the absolute sensor system are received by the at least one secondary radar as the mobile station as signals sent back from the at least one transponder (TR) as the at least one stationary station or the measurement data of the absolute sensor system are received by the at least one secondary radar as the at least one stationary station as signals sent back from the at least one transponder as the mobile station, and
    d) a focusing device for one on the other focusing the mobile station on the stationary station and/or vice versa on the basis of the synthetic aperture.

15. Apparatus according to claim 14,
    **characterised in that**

at least two stationary stations are provided.

16. Apparatus according to claim 14 or 15,
**characterised by**
a data communications device for transferring of data from at least one secondary radar (SR) to the signal processing device.

17. Apparatus according to one or more of the preceding claims 14 to 16,
**characterized by**
a Kalman filter for coarse prediction of a position value of a stationary station serving as advance information.

18. Apparatus according to one or more of the preceding claims 14 to 17,
**characterized in that**
the detection system is a RTOF (round trip time of flight) or a TOA (time of arrival) radiolocation system.

**Revendications**

1. Procédé pour augmenter la précision de mesure d'un système de positionnement par radio présentant une station mobile et au moins une station fixe,
**caractérisé par**

- détection d'un mouvement de la station mobile à partir d'une position initiale effectuée au moyen de données de mesure d'un système de capteur absolu et d'un système de capteur relatif (RS),
- génération d'une antenne virtuelle sous la forme d'une ouverture synthétique effectuée au moyen des données de mesure à partir de coordonnées relatives par rapport à un point de référence, et
- focalisation de la station mobile sur la station fixe et/ou vice-versa effectuée sur la base d'une utilisation de l'ouverture synthétique,
- le système de capteur absolu étant généré à partir d'au moins un radar secondaire (SR) et d'au moins un transpondeur (TR) et
- les données de mesure du système de capteur absolu étant reçus par ledit au moins un radar secondaire sous la forme de signaux renvoyés par ledit au moins un transpondeur (TR),
- la station mobile étant formée par le radar secondaire (SR) et ladite au moins une station fixe par le transpondeur (TR) ou la station mobile par le transpondeur (TR) et ladite au moins une station fixe par le radar secondaire (SR).

2. Procédé selon la revendication 1,
**caractérisé par**
utilisation de l'ouverture synthétique par sélection appropriée de la taille de l'ouverture et/ou de la pondération en amplitude et/ou phase des données de mesure du système de capteur absolu pour produire un comportement directionnel de l'ouverture synthétique de façon que son diagramme directionnel se situe de manière à peu près homogène dans l'aire d'une ellipse d'erreur d'une mesure de position précédente quelconque.

3. Procédé selon la revendication 1,
**caractérisé par**
utilisation de l'ouverture synthétique par un calcul à rebours de positions inconnues (P(r)) de la station mobile à partir d'une position connue ($P_{TP1}$) de la station fixe au moyen d'un procédé de reproduction à ouverture synthétique, en particulier au moyen d'un procédé de reproduction holographique à large bande.

4. Procédé selon la revendication 1,
**caractérisé par**
utilisation de l'ouverture synthétique par un calcul à rebours d'une position inconnue de la station fixe à partir de positions connues de la station mobile.

5. Procédé selon une ou plusieurs des revendications 1 à 4, dans lequel la distance et l'information d'angle entre station mobile, en particulier le radar secondaire (SR), et station fixe, en particulier le transpondeur (TR), sont calculées.

6. Procédé selon la revendication 5, dans lequel les données de distance et d'angle d'une ou plusieurs stations mobiles, en particulier du ou des transpondeurs (TR) sont réunies dans le radar secondaire (SR) pour une ou plusieurs positions au moyen d'un filtre de Kalman.

**7.** Procédé selon la revendication 5 ou 6, dans lequel les stations fixes, en particulier les transpondeurs (TR), sont réalisées sous la forme d'étiquettes de rétrodiffusion passives et une détermination de position absolue est effectuée en distance et angle par rapport à la station mobile, en particulier par rapport au radar secondaire (SR).

**8.** Procédé selon une ou plusieurs des revendications précédentes 1 à 7, **caractérisé par** répétition de la séquence d'étapes pour améliorer la détermination de position de la station mobile.

**9.** Procédé selon la revendication 2, **caractérisé par** une focalisation initialement grossière au moyen d'une valeur de mesure du système de capteur absolu et/ou relatif.

**10.** Procédé selon les revendications 2 ou 9, **caractérisé par** une focalisation initialement grossière au moyen d'informations de mesures précédentes.

**11.** Procédé selon une ou plusieurs des revendications 3 à 10, **caractérisé en ce que** pour le calcul à rebours d'un point b(x, y, z) d'une première station, le signal de réception mesuré $E_n(\omega)$ est corrélé avec la fonction théorique $F_n$ ($a_n$, r, $\omega$) qu'une première station, idéalement supposée sous la forme d'une source d'onde ponctuelle, générerait à la position r = (x, y, z)$^T$ du point de mesure $a_n = (x_n, y_n, Z_n)^T$ vue depuis la deuxième station.

**12.** Procédé selon la revendication 11, **caractérisé en ce qu'**une règle de reconstruction s'écrit :

$$b(x,y,z) = \left| \sum_{n=1}^{M} \int E_n(\omega) \cdot \sum_{P=1}^{P} \alpha_n \cdot \alpha_p \cdot e^{j \cdot \omega \cdot (\tau_n + \tau_p)} d\omega \right|$$

où b(x,y,z) est un point de la première station, en particulier fixe, $E_n(\omega)$ le signal de réception mesuré, $\omega$ la pulsation, $\alpha_n$ une constante d'amortissement caractéristique de chaque parcours de mesure n, $\alpha_p$ un amortissement allant au-delà de l'amortissement de base normal pour chacun des p parcours de transmission, $\tau_n$ le temps de parcours du signal caractéristique du parcours de mesure n, $\tau_p$ les possibles allongements du temps de parcours en raison de réflexions multiples pour chacun des p parcours de transmission, p l'indice de position pour les parcours de transmission, n l'indice pour différents parcours de mesure et M l'indice de parcours final pour les positions de mesure.

**13.** Procédé selon la revendication 12, **caractérisé en ce qu'**une règle de reconstruction s'écrit :

$$b(x,y,z) = \left| \sum_{n=1}^{M} e_n(t = \tau_n) \right|$$

où t est l'instant de réception.

**14.** Dispositif pour augmenter la précision de mesure d'un système de positionnement par radio présentant une station mobile et au moins une station fixe,
**caractérisé par**

a) un système de capteur absolu généré à partir d'au moins un radar secondaire (SR) et d'au moins un transpondeur (TR),
b) au moins un système de capteur relatif (RS) mis à disposition pour quantifier la valeur absolue et la direction d'un changement de position de la station mobile par rapport à une position initiale,
c) un dispositif de traitement de signaux pour le traitement commun de données de mesure détectées au moyen du système de capteur absolu et du système de capteur relatif (RS) pour générer une antenne virtuelle sous la forme d'une ouverture synthétique, les données de mesure du système de capteur absolu étant reçues par ledit au moins un radar secondaire en tant que station mobile sous la forme de signaux renvoyés par ledit au moins un transpondeur (TR) en tant que ladite au moins une station fixe ou les données de mesure du système de capteur absolu étant reçues par ledit au moins un radar secondaire en tant que en tant que ladite au moins une station fixe sous la forme de signaux renvoyés par ledit au moins un transpondeur en tant que station mobile, et

d) un dispositif de focalisation pour focaliser la station mobile sur la station fixe et/ou vice-versa sur la base de l'ouverture synthétique.

**15.** Dispositif selon la revendication 14, **caractérisé en ce qu'**au moins deux stations fixes sont mises à disposition.

**16.** Dispositif selon la revendication 14 ou 15, **caractérisé par** un dispositif de transmission de données pour transmettre les données d'au moins un radar secondaire (SR) au dispositif de traitement de signaux.

**17.** Dispositif selon une ou plusieurs des revendications précédentes 14 à 16, **caractérisé par** un filtre de Kalman pour la prévision approximative, servant de pré-information, d'une valeur de position d'une station fixe.

**18.** Dispositif selon une ou plusieurs des revendications précédentes 14 à 17, **caractérisé en ce que** le système de positionnement est un système de positionnement par radio RTOF (round trip time of flight) ou TOA (time of arrival).

## FIG 1

## FIG 2

FIG 3

$$P_{TP1} = (x_{TP1}, y_{TP1}, z_{TP1})^T$$

$$a_1 = (x_1, y_1, z_1)^T$$

$$a_2 = (x_2, y_2, z_2)^T \quad a_n = (x_n, y_n, z_n)^T$$

$$a_m = (x_m, y_m, z_m)^T$$

FIG 4

FIG 5

**EP 1 834 191 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19910715 C2
- EP 0550073 B1
- DE 19512787
- US 5216429 A
- US 5748891 A
- US 6054950 A
- GB 1605409 A
- DE 3324693
- WO 200167625 A
- DE 0003356 W
- DE 19946168
- DE 10155251
- DE 10208479
- DE 102004017267
- DE 100584180

**In der Beschreibung aufgeführte Nicht-Patentliteratur**

- **M. Vossiek ; L. Wiebking ; P. Gulden ; J. Wieghardt ; C. Hoffmann ; P. Heide.** Wireless Local Positioning. *welcher im Microwave Magazine des IEEE,* 2003, vol. 4 (4), 77-86
- H. Radar mit realer und synthetischer Apertur. **Klausing ; W. Holpp.** Beispiel im Fachbuch. 2000, 213 ff
- **M. Vossiek ; V. Mágori ; H. Ermert.** An Ultrasonic Multielement Sensor System for Position Invariant Object Identification. *IEEE International Ultrasonic Symposium,* 1994